## Europäisches Patentamt
## European Patent Office
## Office européen des brevets

(19)

(11) Veröffentlichungsnummer : **0 052 698**
**B1**

(12)

# EUROPÄISCHE PATENTSCHRIFT

(45) Veröffentlichungstag der Patentschrift :
23.12.87

(21) Anmeldenummer : 81106414.6

(22) Anmeldetag : 18.08.81

(51) Int. Cl.⁴ : **G 01 D 7/08**, G 01 B 17/02,
G 01 B 7/06

(54) Überwachungseinrichtung für den Herstellungsvorgang von Kabeln.

(30) Priorität : 26.11.80 AT 5769/80

(43) Veröffentlichungstag der Anmeldung :
02.06.82 Patentblatt 82/22

(45) Bekanntmachung des Hinweises auf die Patenterteilung : 23.12.87 Patentblatt 87/52

(84) Benannte Vertragsstaaten :
AT CH FR GB IT LI

(56) Entgegenhaltungen :
EP-A- 0 045 056
GB-A- 641 674
GB-A- 1 136 506
GB-A- 1 145 981
US-A- 3 901 071
FEINWERKTECHNIK & MESSTECHNIK, Band 86, Nr. 6, August/September 1978, Seiten 260-262, München, DE., M. BECKER et al.: "Modernes Messen und Überwachen mit dem Bildschirmgerät "Datascope 2002"

(73) Patentinhaber : WIENER KABEL- UND METAL-LWERKE Gesellschaft m.b.H.
Siemensstrasse 88
A-1210 Wien (AT)

(72) Erfinder : Frankl, Klaus
Schreiberweg 76
A-1190 Wien (AT)

(74) Vertreter : Pater, Max, Dr.
Siemens Aktiengesellschaft Österreich Postfach 22 02 61
D-8000 München 22 (DE)

## Beschreibung

Die Erfindung betrifft die Verwendung einer Einrichtung zur Überwachung der Stärke eines Kabelmantels bei der Herstellung von Kabeln, ausgenommen Bleimantelkabel, wobei die Einrichtung Ultraschall-Echosonden aufweist, die in einer zur Längsrichtung des Kabels senkrechten Ebene gegeneinander versetzt angeordnet sind und die über eine Zeitmultiplexeinrichtung und einen ihr nachgeschalteten ersten Spannungsdiskriminator zur Anzeige der Meßwerte der Ultraschall-Echosonden zusammen mit den dazugehörigen Sollwerten und zur Farbänderung der Anzeige bei Abweichung eines Meßwertes von seinem Sollwert mit dem Farbsteuereingang der Farbbildröhre eines Farbmonitors verbunden sind, wobei die mit der Zeilenablenkspule der Farbbildröhre verbundene Zeilenablenkspannungseinheit des Farbmonitors zur Steuerung der Meßwertübertragung mit einem Eingang der Zeitmultiplexeinrichtung und die der Anzeige der aufeinanderfolgenden Meßwerte als Vertikalstreifen dienende Vertikalablenkspule der Farbbildröhre mit einem Ausgang der Zeitmultiplexeinrichtung verbunden ist und wobei die Einrichtung einen ersten Meßwertgeber für die hergestellte Kabellänge aufweist, dessen Ausgangsspannung mit der Zeilenablenkspannung in einer Addierschaltung verknüpft ist, deren Ausgang zur Erzeugung eines der Geschwindigkeit der Kabelherstellung entsprechenden, horizontalen Wanderns der mit der Farbbildröhre dargestellten Vertikalstreifen mit einem Eingang der Zeitmultiplexeinrichtung verbunden ist.

Eine derartige Überwachungseinrichtung ist Gegenstand der EP-A 45 056 (Prioritätstag 23.07.80, Veröffentlichungstag : 03.02.82) und wird dort bei der Herstellung von Bleikabeln verwendet, um dem Bedienungspersonal die Beachtung der Wanddicke des auf das fertig verseilte Kabel aufgebrachten Mantels zu erleichtern ; die genaue Einhaltung der zulässigen Untergrenze der Dicke des Mantels bringt beachtliche Einsparungen an Mantelmaterial, die im Rahmen der derzeitigen Arbeitsbedingungen eine Senkung des Mehrverbrauches gegenüber dem theoretischen Minimum auf mindestens die Hälfte ermöglicht.

Das genaue Messen der Wandstärke von Rohren zeigt die US-A-3,901,071. Dazu werden Ultraschall-Echosonden in einer senkrecht zur Längsrichtung des Rohres ausgerichteten Ebene gegeneinander versetzt angeordnet und mittels einer Multiplexeinrichtung abgefragt. Aus den Meßwerten wird die mittlere Wandstärke berechnet und angezeigt, sowie die Einhaltung dieser Wandstärke während des Produktionsvorganges überwacht.

In dem Artikel « Modernes Messen und Überwachen mit dem Bildschirmgerät Datascope 2002 » von M. Becker und R. Schmidt, Feinwerktechnik & Messtechnik, 86 (1978)6, Seiten 260 bis 262, wird ein Farbmonitor zur Darstellung von Meßwerten in Form von Vertikalstreifen vorgestellt. Mit Hilfe eines derartigen Gerätes können beispielsweise bei der Herstellung eines Kabelmantels die Meßwerte mehrerer Ultraschall-Echosonden sowie ein Durchschnittswert dieser Meßwerte unter Benutzung einer Multiplexschaltung jeweils nebeneinander als Vertikalstreifen dargestellt werden. Wie auf Seite 261 beschrieben, sind je Meßkanal zwei Grenzwerte programmierbar, deren Überschreiten eine Änderung der Farbe der Vertikalstreifen zur Folge hat.

Der Erfindung liegt die Aufgabe zugrunde, bei der Herstellung eines nicht aus Blei bestehenden Kabelmantels die Abweichung vom möglichen Minimalwert der Wandstärke sowie die Symmetrie des Mantels in Bezug auf die Kabelseele als besonders wichtige Parameter in übersichtlicher Weise darzustellen.

Dies wird durch die Verwendung einer Einrichtung zur Überwachung der Stärke eines Kabelmantels der eingangs erwähnten Art erreicht.

Es wird somit jedem Querschnitt des Kabels eine Gruppe von ablesbaren Zeichen für die Dicke des Mantels zugeordnet, und diese Zeichengruppe wandert, dem Ablauf des Kabels entsprechend, über den Bildschirm des Farbmonitors. Dadurch bleiben nicht nur die Augenblickswerte, sondern auch die unmittelbar vorangegangenen Werte der Wandstärke sichtbar. Diese besonders suggestive, optische Form zeigt in einfacher Weise, ob bei der Herstellung des Kabelmantels optimal verfahren wird. Die Aussagekraft der Anzeige bezüglich des Auftretens zeitlicher Meßwertänderungen und der damit in Zusammenhang stehenden Abweichungen von den optimalen Verfahrensparametern wird wesentlich erhöht.

Eine besonders deutliche grafische Darstellung von Ist- und Sollverbrauch an Mantelmaterial wird dadurch erreicht, daß ein zweiter Meßwertgeber für den Vorrat an Mantelmaterial mit einem Eingang und der erste Meßwertgeber über eine der Ermittlung des Sollwertes des Mantelmaterialverbrauches dienende Recheneinheit mit einem anderen Eingang der Zeitmultiplexeinrichtung verbunden ist, zwecks Anzeige des Vorrates an Mantelmaterial und des Sollwertes des Mantelmaterialverbrauches an der Farbbildröhre.

Die Möglichkeit des Nichtbeachtens einer längeren Überschreitung der Grenzwerte wird dadurch herabgesetzt, daß ein zweiter Spannungsdiskriminator zwischen die Zeitmultiplexeinrichtung und die Vertikalablenkspule geschaltet ist und zur Abgabe eines Warnsignals bei Über- oder Unterschreiten von Grenzwerten der Meßwerte der Ultraschall-Echosonden mit einer Alarmeinheit verbunden ist.

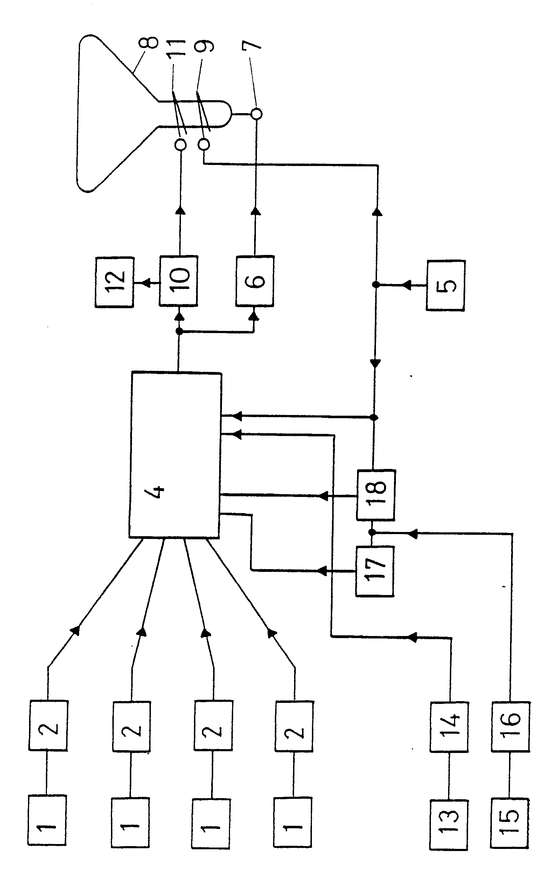

Zur Erläuterung der Erfindung anhand eines Ausführungsbeispieles wird nachfolgend auf die Zeichnung Bezug genommen, die ein schematisches Blockschaltbild des Ausführungsbeispieles zeigt.

Die Figur zeigt Ultraschall-Echosonden 1, die in einer Normalebene zueinander versetzt um ein durchlaufendes Kabel nach dessen Ummantelung angeordnet sind. Jedes Ausgangssignal wird über zugeordnete Meßspannungsverstärker 2 an je einen Eingang einer Zeitmultiplexeinrichtung 4 geführt. Der Ausgang der Zeitmultiplexeinrichtung 4 ist über einen ersten Spannungsdiskriminator 6 mit dem Farbsteuereingang 7 der Farbbildröhre 8 eines Farbmonitors verbunden. Der erste Spannungsdiskriminator 6 ist zweischrankig, wodurch ein Über- und Unterschreiten zweier Grenzwerte jedes Meßwertes durch Farbänderung dargestellt wird.

Die Eingänge der Zeitmultiplexeinrichtung 4 werden, gesteuert von den Signalen der Zeilenablenkspannungseinheit 5 des Farbmonitors, seriell mit dem Ausgang der Zeitmultiplexeinrichtung 4 verbunden. Dieser Ausgang ist außer mit dem Farbsteuereingang 7 auch noch mit der Vertikalablenkspule 11 des Farbmonitors zur Anzeige der aufeinanderfolgenden Meßwerte verbunden. Somit bestimmt die Zeitdauer, mit der eine Ultraschall-Echosonde 1 über die Zeitmultiplexeinrichtung 4 mit der Vertikalablenkspule 11 verbunden ist, die Breite des entstehenden Vertikalstreifens. Die Zeilenablenkspannungseinheit 5 führt während dieser Zeit den Elektronenstrahl der Farbbildröhre 8 mit der Zeilenablenkspule 9 über den Bildschirm. Die Höhe des Vertikalstreifens wird von der Größe des Meßwertes bestimmt. Ein Farbumschlag wird vom ersten Spannungsdiskriminator 6 über den Farbsteuereingang 7 ausgelöst.

Zwischen den Ausgang der Zeitmultiplexeinrichtung 4 und die Vertikalablenkspule 11 ist ein zweiter Spannungsdiskriminator 10 geschaltet. Dieser bewirkt bei längerer Überschreitung der Grenzwerte des Meßsignals die Abgabe eines akustischen Warnsignals durch eine Alarmeinheit 12.

Ein erster Meßwertgeber 15 für die hergestellte Kabellänge ist über einen ersten Spannungsverstärker 16 mit einem Eingang der Zeitmultiplexeinrichtung 4 verbunden, wobei über eine Addierschaltung 18 sein Meßwert mit der Zeilenablenkspannung zu einem Summensignal verknüpft wird. Durch diese Maßnahme wird erreicht, daß sich die Vertikalstreifen der Meßwertanzeige mit einer zur Kabelherstellung proportionalen Geschwindigkeit über den Bildschirm des Farbmonitors bewegen. Ein Meßwert einer Ultraschall-Echosonde 1 wird nicht nur an einer Stelle angezeigt, sondern die Anzeige wandert beispielsweise von links nach rechts über den Bildschirm. Von den vier Ultraschall-Echosonden 1 wird ein Querschnitt des Kabelmantels gemessen. Diese vier Vertikalstreifen erscheinen hintereinander und zeigen Mantelstärke und Exzentrizität. Die nächsten vier Vertikalstreifen repräsentieren die nächste Querschnittsmessung des Kabelmantels.

Darüber hinaus wird auch noch der Ist- und Sollverbrauch an Mantelmaterial grafisch dargestellt. Dazu ist ein zweiter Meßwertgeber 13 für den Vorrat an Mantelmaterial über einen zweiten Spannungsverstärker 14 und der erste Meßwertgeber 15 über eine Recheneinheit 17 mit Eingängen der Zeitmultiplexeinrichtung 4 verbunden. Die Recheneinheit 17 bestimmt den Sollwert des Verbrauches an Mantelmaterial aus der gefertigten Kabellänge. Diese beiden Meßwerte werden dadurch gemeinsam mit den Meßwerten der Ultraschall-Echosonden 1 am Bildschirm des Farbmonitors dargestellt.

**Patentansprüche**

1. Verwendung einer Einrichtung zur Überwachung der Stärke eines Kabelmantels bei der Herstellung von Kabeln, ausgenommen Bleimantelkabel, wobei die Einrichtung Ultraschall-Echosonden (1) aufweist, die in einer zur Längsrichtung des Kabels senkrechten Ebene gegeneinander versetzt angeordnet sind und die über eine Zeitmultiplexeinrichtung (4) und einen ihr nachgeschalteten ersten Spannungsdiskriminator (6) zur Anzeige der Meßwerte der Ultraschall-Echosonden (1) zusammen mit den dazugehörigen Sollwerten und zur Farbänderung der Anzeige bei Abweichung eines Meßwertes von seinem Sollwert mit dem Farbsteuereingang (7) der Farbbildröhre (8) eines Farbmonitors verbunden sind, wobei die mit der Zeilenablenkspule (9) der Farbbildröhre (8) verbundene Zeilenablenkspannungseinheit (5) des Farbmonitors zur Steuerung der Meßwertübertragung mit einem Eingang der Zeitmultiplexeinrichtung (4) und die der Anzeige der aufeinanderfolgenden Meßwerte als Vertikalstreifen dienende Vertikalablenkspule (11) der Farbbildröhre (8) mit einem Ausgang der Zeitmultiplexeinrichtung (4) verbunden ist und wobei die Einrichtung einen ersten Meßwertgeber (15) für die hergestellte Kabellänge aufweist, dessen Ausgangsspannung mit der Zeilenablenkspannung in einer Addierschaltung (18) verknüpft ist, deren Ausgang zur Erzeugung eines der Geschwindigkeit der Kabelherstellung entsprechenden, horizontalen Wanderns der mit der Farbbildröhre (B) dargestellten Vertikalstreifen mit einem Eingang der Zeitmultiplexeinrichtung (4) verbunden ist.

2. Verwendung einer Überwachungseinrichtung nach Anspruch 1, wobei ein zweiter Meßwertgeber (13) für den Vorrat an Mantelmaterial mit einem Eingang und der erste Meßwertgeber (15) über eine der Ermittlung des Sollwertes des Mantelmaterialverbrauches dienende Recheneinheit (17) mit einem anderen Eingang der Zeitmultiplexeinrichtung (4) verbunden ist, zwecks Anzeige des Vorrates an Mantelmaterial und des Sollwertes des Mantelmaterialverbrauches an der Farbbildröhre (8).

3. Verwendung einer Überwachungseinrichtung nach Anspruch 1 oder 2, wobei ein zweiter Spannungsdiskriminator (10) zwischen die Zeitmultiplexeinrichtung (4) und die Vertikalablenkspule (11) geschaltet ist und zur Abgabe eines Warnsignals bei Über- oder Unterschreiten von Grenzwerten der Meßwerte der Ultraschall-Echosonden (1) mit einer Alarmeinheit (12) verbunden ist.

**Claims**

1. Use of a device for monitoring the thickness of a cable casing in the production of cables other than lead covered cables, where the device comprises ultrasonic echo probes (1) arranged mutually offset in a plane at right angles to the longitudinal direction of the cable and connected to the colour control input (7) of the colour picture tube (8) of a colour monitor via a t. d. m. device (4) and a following first voltage discriminator (6) which displays the measured values from the ultrasonic echo probes (1) together with the associated theoretical values and changes the colour of the display when a measured value differs from its theoretical value, where the line scanning voltage unit (5) of the colour monitor, connected to the line scanning coil (9) of the colour picture tube (8) for control of the measured value transmission, is connected to an input of the t. d. m. device (4), and the vertical scanning coil (11) of the colour picture tube (8) which serves to display the consecutive measured values as vertical strips, is connected to an output of the t. d. m. device (4) and where the device comprises a first measured value sensor (15) for the produced cable length, the output voltage of which is logic-linked to the line scanning voltage in an adder circuit (18) whose output is connected to an input of the t. d. m. device (4) in order to produce a horizontal movement of the vertical strips, represented by the colour picture tube (8), which corresponds to the speed of the cable production.

2. Use of a monitoring device as claimed in Claim 1, where a second measured value sensor (13) for the supply of casing material is connected to one input of the t. d. m. device (4), and the first measured value sensor (15) is connected via a calculating unit (17), determining the theoretical value of the consumption of casing material, to another input of the t. d. m. device (4), in order to display the supply of casing material and the theoretical value of the consumption of casing material on the colour picture tube (8).

3. Use of a monitoring device as claimed in Claims 1 or 2, where a second voltage discriminator (10) is connected between the t. d. m. device (4) and the vertical scanning coil (11) and is connected to an alarm unit (12) to emit a warning signal if limit values of the measured values from the ultrasonic echo probes (1) are overshot or undershot.

**Revendications**

1. Utilisation d'un dispositif pour contrôler l'épaisseur de la gaine d'un câble lors de la fabrication de câbles, à l'exclusion des câbles à gaine de plomb, dans lequel le dispositif comporte des sondes d'échos ultrasonores (1), qui sont disposées en étant décalées réciproquement dans un plan perpendiculaire à la direction longitudinale du câble et sont reliées par l'intermédiaire d'un dispositif de multiplexage temporel (4) et d'un premier discriminateur de tension (6), branché en aval de ce dispositif et servant à afficher les valeurs de mesure des sondes d'échos ultrasonores (1) ainsi que les valeurs de consigne, qui y sont associées, et à modifier la couleur de l'affichage dans le cas d'une variation de la valeur de mesure par rapport à une valeur de consigne, à l'entrée (7) de commande des couleurs du tube image en couleurs (8) d'un moniteur en couleurs, et dans lequel l'unité (5) du moniteur en couleurs, qui délivre la tension de balayage horizontale et est reliée à la bobine de balayage horizontal (9) du tube image en couleurs (8), est reliée à une entrée du dispositif de multiplexage temporel (4), et la bobine de déviation verticale (11), qui sert à l'affichage des valeurs de mesure successives sous la forme de bandes verticales, du tube image en couleurs (8) est reliée à une sortie du dispositif de multiplexage temporel (4), et dans lequel le dispositif comporte un premier générateur de valeurs de mesure (15) pour la longueur de câble fabriquée, dont la tension de sortie est combinée à la tension de balayage horizontal dans un circuit additionneur (18), dont la sortie est reliée à une entrée du dispositif de multiplexage temporel (4), en vue de produire un déplacement horizontal, correspondant à la vitesse de fabrication du câble, des bandes verticales représentées au moyen du tube image en couleurs (8).

2. Utilisation d'un dispositif de contrôle suivant la revendication 1, dans lequel un second générateur de valeurs de mesure (13) servant à indiquer la réserve en matériau constituant la gaine est relié à une entrée du dispositif de multiplexage temporel (4), et le premier générateur de valeurs de mesure (15) est relié par l'intermédiaire d'une unité de calcul (17), servant à déterminer la valeur de consigne de la consommation du matériau constituant la gaine, à une autre entrée du dispositif de multiplexage temporel (4), dans le but d'afficher la réserve en matériau constituant la gaine et la valeur de consigne de la consommation du matériau constituant la gaine sur le tube image en couleurs (8).

3. Utilisation d'un dispositif de contrôle suivant la revendication 1 ou 2, dans lequel un second discriminateur de tension (10) est branché entre le dispositif de multiplexage temporel (4) et la bobine de déviation verticale (11) et est relié à une unité d'alarme (12), en vue de délivrer un signal d'avertissement dans le cas où les valeurs de mesure des sondes d'échos ultrasonores (1) dépassent, par le haut ou par le bas, des valeurs limites.